# EUROPÄISCHE PATENTSCHRIFT

(11) **EP 3 717 801 B1**
(45) Veröffentlichungstag und Bekanntmachung des Hinweises auf die Patenterteilung: **11.09.2024**
(21) Anmeldenummer: 18811472.2
(22) Anmeldetag: 20.11.2018
(51) Int. Cl.: F16H 57/039, F16H 57/12, F16H 57/022

(54) **SCHNECKENANTRIEB**
WORM DRIVE
MÉCANISME D'ENTRAÎNEMENT À VIS SANS FIN

(30) Priorität: 28.11.2017 DE 102017128182
(43) Veröffentlichungstag der Anmeldung: 07.10.2020
(73) Patentinhaber: Moog GmbH, 71034 Böblingen (DE)
(72) Erfinder: EITELBUSS, Daniel, 71083 Herrenberg (DE)
(74) Vertreter: Wittmann, Ernst-Ulrich
(86) Internationale Anmeldenummer: PCT/EP2018/081933
(87) Internationale Veröffentlichungsnummer: WO 2019/105804

(56) Entgegenhaltungen:
- WO-A1-2007/049444
- JP-A- 2005 256 930
- US-A- 5 245 351
- US-A1- 2004 231 445

## Beschreibung

Die vorliegende Erfindung betrifft einen Schneckenantrieb, insbesondere einen Schneckenantrieb mit einer einstellbaren Vorspannung der Aufnahmeeinheit der Schneckenwelle in Bezug auf die Aufnahmeeinheit des Schneckenrads.

Schneckenantriebe sind im Stand der Technik bekannt. Bekannte Schneckenantriebe weisen eine mit einem oder mehreren Schraubengängen versehene Welle, der Schneckenwelle, und einem darin kämmenden schrägverzahnten Rad, dem Schneckenrad auf. Die Achsen der Schneckenwelle und dem Schneckenrad sind zumeist um 90° Grad zueinander versetzt, mit sich kreuzenden Achsen angeordnet und gelagert, wodurch die Bewegungskraft im rechten Winkel über eine Gleitwirkung übertragen wird. In der Regel ist die Schneckenwelle das treibende Element und das Schneckenrad das kraftaufnehmende angetriebene Rad. Konstruktionsbedingte Ausnahmen von der Regel werden hierdurch nicht ausgeschlossen. Die Schneckenwelle kann dabei rechts- oder linksansteigend ausgeführt sein. Bei der Übertragung der Bewegungskraft reiben die Schraubengänge der Schneckenwelle auf den Gegenflanken des Schneckenrades, wodurch die mechanischen Komponenten (Schneckenwelle, Schneckenrad, Lagerung) des Schneckenantriebs einem Verschleiß ausgesetzt sind. Dieser Effekt tritt bei Schneckenantriebsausführungen mit einem Schraubengang, oder bei Schneckenantriebsausführungen bei denen nur ein Schraubengang während der Kraftübertragung in Reibkontakt steht, noch verstärkter auf.

Bei den im Stand der Technik bekannten Schneckenantrieben ist nachteilig, dass der Reibkontakt zwischen der Schneckenwelle und dem Schneckenrad eine starke Reibung, die sogenannte Gleitreibung verursacht, was in eine hohe Betriebstemperatur und einen niedrigen Wirkungsgrad des Schneckenantriebs resultiert. Eine Verringerung der auftretenden Gleitreibung erfolgt im Stand der Technik daher häufig in der Form, dass verschiedene, effizient aufeinander abgestimmte Materialien für die Schneckenwelle (z.B. Stahl) und für das Schneckenrad (z.B. Bronze) verwendet werden. Eine Verwendung von gleichen Materialien (z.B. nur Stahl) für die Schneckenwelle und das Schneckenrad gleichermaßen, führt zu einer viel höheren Reibung und somit auch zu einem niedrigeren Wirkungsgrad und höherem Verschleiß.

Nachteilig erweist sich die Ausgestaltung der Schneckenwelle und des Schneckenrads aus unterschiedlichen Materialen derart, dass diese somit einen unterschiedlichen Wärmeausdehnungskoeffizienten aufweisen, wodurch sich die Materialen, entsprechend der Umgebungstemperatur bzw. der Betriebstemperatur des Schneckenantriebs, unterschiedlich verhalten bzw. ausdehnen. Durch das unterschiedliche Ausdehnungsverhalten des Materials der Schneckenwelle und des Schneckenrades, im besonderen derzueinander in Kontakt stehenden Verzahnung, kann zu einem erhöhten Verschleiß und/oder zu einer Verklemmung der Verzahnung und somit zu einer Beschädigung des Schneckenantriebs führen.

Im Stand der Technik werden zum Ausgleich der unterschiedlichen Wärmeausdehnungskoeffizienten und um die notwendige leichtgängige Funktion des Schneckenantriebs bei unterschiedlichen Umgebungstemperaturen bzw. Betriebstemperaturen des Schneckenantriebs zu gewährleisten, die Schneckenantriebe mit einem fest eingestelltem Spiel zwischen der Schneckenwelle und dem Schneckenrad versehen. Durch das fest eingestellte Spiel zwischen den Verzahnungen der Schneckenwelle und dem Schneckenrad, wird eine erhöhte Reibungskraft zwischen den Verzahnungen bzw. ein daraus resultierendes Verklemmen der Schneckenwelle mit dem Schneckenrad bei Wärmeausdehnungen dieser reduziert. Insbesondere bei Materialkombinationen mit unterschiedlichen Wärmeausdehnungskoeffizienten, wird ein größeres Spiel benötigt, als bei Materialkombinationen mit nahezu gleichen Wärmeausdehnungskoeffizienten.

Weiterhin nachteilig erweist sich, dass die Schneckenwelle und das Schneckenrad in der Praxis nicht ohne Fertigungstoleranzen hergestellt werden können, was zu einem erhöhten Reibkontakt und somit zu erhöhter Reibung und einem erhöhten Verschleiß und/oder einer Verklemmung führen kann. Damit gerade bei Fertigungstoleranzen eine leichtgängige Funktion gewährleistet werden kann und/oder um die Fertigungstoleranzen kompensieren zu können und somit den Verschleiß der mechanischen Komponenten so gering wie möglich zu halten, werden die Schneckenantriebe auch aus diesem Grund mit einem festeingestellten Spiel zwischen der Schneckenwelle und dem Schneckenrad versehen.

Hierbei erweist sich ein festeingestelltes Spiel zwischen der Schneckenwelle und dem Schneckenrad gerade für die Verwendung des Schneckenantriebs für präzise Stellanwendungen als nachteilig und kommen somit für diesen Anwendungsbereich in der Praxis nicht zum Tragen. Das durch die Abstände zwischen der Schneckenwelle und dem Schneckenrad hervorgerufene Flankenspiel führt im Normalbetrieb, zu einem Getriebespiel, bei dem eine Bewegung des Schneckenrads bei stillstehender Schneckenwelle möglich ist und somit schlussendlich den Einsatz des Schneckenantriebs für Stellanwendungen, soweit überhaupt möglich, nur sehr bedingt zulässt. Unter Normalbetrieb ist hierbei der Betrieb des Schneckenantriebs mit fest eingestelltem Spiel zu verstehen, bei dem das Spiel den maximalen Abstand für eine Kompensation von Wärmeausdehnung und/oder Fertigungstoleranzen, ohne dass diese sich gerade auswirken.

Zudem wird bei Stellanwendungen eine hohe Positionsgenauigkeit erwartet, welche nur mittels einem spielfreien Antrieb/Getriebe bereitgestellt werden kann. Zudem führt das Flankenspiel und die auf die Verzahnung wirkenden Momente zu einem erhöhten Verschleiß.

Weiterhin nachteilig erweisen sich Schneckenantriebe mit festeingestelltem Spiel in Bezug auf notwendige Anpassungen bei sich ändernden Betriebsparametern, sowie ändernden Umgebungs- und/oder Betriebstemperaturen als aufwendig und kostenintensiv. Für das Ein- bzw. Verstellen des Spiels des Schneckenantriebs ist in den meisten Fällen ein erhöhter Wartungs- und Einrichtungsaufwand, sowie Spezialwerkzeug notwendig.

US 2004/231445 A1 betrifft ein Schneckenantriebssystem für astronomische Teleskope und LIDAR Systeme. Das Schneckenantriebssystem besteht aus einer Plattenbaugruppe, einer Nabenbaugruppe, einer Schneckenbaugruppe und einer Motorbaugruppe. Die Nabenbaugruppe umfasst ein Schneckengetriebe mit einem verstellbaren Kupplungsmechanismus für das Schneckengetriebe. Die Plattenbaugruppe 51 hält die Nabenbaugruppe in präziser Position zur Schneckenbaugruppe und die Motorbaugruppe in richtiger Position zur Schneckenbaugruppe. Die Schneckenbaugruppe ist auf der Oberfläche der Plattenbaugruppe 51 auf einem Auflagekugel 55 über die Präzessionsbohrung 42 gelagert Die Schneckenbaugruppe ist an der Plattenbaugruppe 51 über eine Schraube 56 und eine Feder 57 gesichert

WO 2007/049444 A1 betrifft einen Schneckengetriebeuntersetzer einer elektrischen Servolenkung. Der Schneckengetriebeuntersetzer umfasst einen Eingriffsmechanismus 70 der die Zähne der Schnecke 411 in die Zähne des Schneckenrades 412 presst Der Eingriffsmechanismus umfasst ein Halteelement 72, zwei Stangen 73, eine Feder 74, Anpasspakete 75 und Stopper 76. Der Stopper umfasst eine Mutter 76a und eine Unterlegscheibe 76b. Die Stangen weisen einen Gewindebereich zum Aufschreiben der Mutter auf. Das Halteelement weist ein Loch 72a zur Durchführung der Stangen 73 auf. Die Feder 74 ermöglicht eine Bewegung des Halteelementes in Richtung Schneckenrad.

US 5 245 351 A betrifft eine Vorrichtung zur Ausrichtung einer Satelliten-Sendesignalantenne, die so ausgerichtet werden kann, dass ein Signal von einem Satelliten empfangen werden kann. Die Vorrichtung umfasst ein Schneckengetriebe, einen elektrischen Antrieb 17 und ein Getriebe 18 zum Antrieb des Schneckengetriebes durch den elektrischen Antrieb. Die Schnecke 16 des Schneckenantriebes ist in ein Gehäuse 19 eingelassen das an einem Drehpunkt 20 mit dem Gehäuse 11 der Vorrichtung verbunden ist An dem Gehäuse 19 ist eine Steigung 26 ausgebildet, an der eine geneigte Kante 23 einer Andrückplatte 23 angelegt ist Die Andrückplatte ist entlang einer Schraube 22 durch eine Feder 24 bewegbar und drückt die Andrückplatte an das Gehäuse 19 der Schnecke, bei einer Bewegung in Richtung Getriebe.

JP 2005 256930 A zeigt einen Schneckenradmechanismus mit verbessertem Folgevermögen einer Schnecke zu einem Schneckenrad und verbesserter Steifigkeit, der in der Lage ist, sowohl die Beseitigung des Spiels als auch eine gleichmäßige Drehung zu realisieren, indem ein Federelement auf der gleichen Welle mit einer Richtung angeordnet wird, in der eine normale Richtungskraft durch das Auslaufen der Drehung der Schnecke und des Schneckenrads erzeugt wird, um die auf das Federelement anzuwendende Momentenkraft zu beseitigen, um eine parallele Kraft zu erhalten.

Der vorliegenden Erfindung liegt daher die Aufgabe zu Grunde, einen Schneckentrieb der eingangs genannten Art zur Verfügung zu stellen, welches die Nachteile des Standes der Technik wenigstens teilweise überwindet und sich insbesondere durch eine einstellbare Vorspannung der Aufnahmeeinheit der Schneckenwelle in Bezug auf die Aufnahmeeinheit des Schneckenrads, insbesondere bei sich geändertem Spiel aufgrund von Fertigungstoleranzen und unterschiedlichen Wärmeausdehnungskoeffizienten der verwendeten Materialen für die mechanischen Komponenten auszeichnet.

Hierbei erweist sich ein festeingestelltes Spiel zwischen der Schneckenwelle und dem Schneckenrad gerade für die Verwendung des Schneckenantriebs für präzise Stellanwendungen als nachteilig und kommen somit für diesen Anwendungsbereich in der Praxis nicht zum Tragen. Das durch die Abstände zwischen der Schneckenwelle und dem Schneckenrad hervorgerufene Flankenspiel führt im Normalbetrieb, zu einem Getriebespiel, bei dem eine Bewegung des Schneckenrads bei stillstehender Schneckenwelle möglich ist und somit schlussendlich den Einsatz des Schneckenantriebs für Stellanwendungen, soweit überhaupt möglich, nur sehr bedingt zulässt. Unter Normalbetrieb ist hierbei der Betrieb des Schneckenantriebs mit fest eingestelltem Spiel zu verstehen, bei dem das Spiel den maximalen Abstand für eine Kompensation von Wärmeausdehnung und/oder Fertigungstoleranzen, ohne dass diese sich gerade auswirken.

Zudem wird bei Stellanwendungen eine hohe Positionsgenauigkeit erwartet, welche nur mittels einem spielfreien Antrieb/Getriebe bereitgestellt werden kann. Zudem führt das Flankenspiel und die auf die Verzahnung wirkenden Momente zu einem erhöhten Verschleiß.

Weiterhin nachteilig erweisen sich Schneckenantriebe mit festeingestelltem Spiel in Bezug auf notwendige Anpassungen bei sich ändernden Betriebsparametern, sowie ändernden Umgebungs- und/oder Betriebstemperaturen als aufwendig und kostenintensiv. Für das Ein- bzw. Verstellen des Spiels des Schneckenantriebs ist in den meisten Fällen ein erhöhter Wartungs- und Einrichtungsaufwand, sowie Spezialwerkzeug notwendig.

Der vorliegenden Erfindung liegt daher die Aufgabe zu Grunde, einen Schneckentrieb der eingangs genannten Art zur Verfügung zu stellen, welches die Nachteile des Standes der Technik wenigstens teilweise überwindet und sich insbesondere durch eine einstellbare Vorspannung der Aufnahmeeinheit der Schneckenwelle in Bezug auf die Aufnahmeeinheit des Schneckenrads, insbesondere bei sich geändertem Spiel aufgrund von Fertigungstoleranzen und unterschiedlichen Wärmeausdehnungskoeffizienten der verwendeten Materialen für die mechanischen Komponenten auszeichnet.

Erfindungsgemäß wird die voranstehende Aufgabe durch einen Schneckenantrieb mit den Merkmalen des Patentanspruchs 1 gelöst. Bevorzugte Ausführungsformen sind Gegenstand der Unteransprüche.

Danach umfasst der in Rede stehende Schneckenantrieb eine Schneckenwelle und eine erste Aufnahmeeinheit. Die Schneckenwelle ist hierbei in der ersten Aufnahmeeinheit drehbeweglich gelagert. Außerdem umfasst der Schneckenantrieb ein Schneckenrad und eine zweite Aufnahmeeinheit. Das Schneckenrad ist hierbei in der zweiten Aufnahmeeinheit drehbeweglich gelagert. Die erste Aufnahmeeinheit ist auf der zweiten Aufnahmeeinheit angeordnet und die drehbeweglich gelagerte Schneckenwelle steht mit dem Schneckenrad der zweiten Aufnahme zur Übertragung eines Drehmoments in Kontakt.

Weiterhin umfasst der Schneckenantrieb Führungsbolzen zur lösbaren Verbindung der ersten Aufnahmeeinheit mit der zweiten Aufnahmeeinheit. Erfindungsgemäß nimmt hierbei die erste Aufnahmeeinheit die Führungsbolzen wenigstens teilweise auf und die zweite Aufnahmeeinheit ist mit einem der Führungsbolzen, vorzugsweise mit einem ersten Ende des Führungsbolzens verbunden.

Erfindungsgemäß ist an einem zweiten Ende des Führungsbolzens zwischen der ersten Aufnahmeeinheit und einem Befestigungsmittel ein Federelement angeordnet.

Hierbei ist unter einem Federelement im allgemeinen ein Konstruktionselement zu verstehen, dass die Fähigkeit aufweist, Arbeit auf einem vorbestimmten Weg bei Belastung aufzunehmen und diese ganz oder teilweise als Formänderungsenergie zu speichern, bzw. bei Entlastung ganz oder teilweise wieder abzugeben.

Die Schneckenwelle ist eine aus einem oder mehreren Schraubengängen versehene Welle und ist im Allgemeinen eine Sonderform eines schrägverzahnten Zahnrades. Der Winkel der Schrägverzahnung ist derart ausgebildet, dass ein Zahn sich mehrfach schraubenförmig um die Radachse (Wellenachse) windet. Der Zahn der Schneckenwelle wird auch als Gang bezeichnet. Die Schneckenwelle kann eingängig oder mehrgängig ausgeführt sein, wodurch sich das Übersetzungsverhältnis zwischen der Schneckenwelle und dem Schneckenrad verändern lässt.

Die Schneckenwelle ist im Vergleich zum Schneckenrad einem größeren Verschleiß ausgesetzt und wird beispielsweise aus Einsatz- und Nietrierstählen gefertigt, um eine bessere Verschleißfestigkeit zu erhalten. Zusätzlich kann die Verschleißfestigkeit der Schneckenwelle beispielsweise durch anschließendes Einsatzhärten oder Nitrieren der Oberfläche verbessert werden. Weitere Materialien und/oder Verarbeitungsverfahren sind hierdurch nicht ausgeschlossen.

Die Schneckenwelle ist in der ersten Aufnahmeeinheit angeordnet und durch ein Festlager und ein Loslager drehbeweglich gelagert. Vorteilhafterweise erfolgt hierdurch eine radiale Abstützung der Schneckenwelle und eine Führung in axialer Richtung. Zudem werden mögliche wärmebedingte Längenänderungen der Schneckenwelle zwangsfrei durch das Festlager und Loslager aufgenommen. Vorzugsweise erfolgt die Lagerung der Schneckenwelle durch Schrägkugellager.

Das Schneckenrad ist in einer einfachen Ausführung ein schräg verzahntes Stirnrad. Um die Reibung durch den Reibkontakt zwischen der Schneckenwelle und dem Schneckenrad zu minimieren, ist das Schneckenrad aus einem anderen und auch weicherem Material als die Schneckenwelle hergestellt, beispielsweise aus Messing oder Bronze, oder einem selbstschmierenden Kunststoff. Das Schneckenrad ist in der zweiten Aufnahmeeinheit drehbeweglich gelagert. Weitere Materialien sind durch die beispielhafte Ausführungsform nicht ausgeschlossen.

Die Anordnung der ersten Aufnahmeeinheit mit der Schneckenwelle oberhalb der zweiten Aufnahmeeinheit mit dem Schneckenrad stellt hierbei nur eine beispielhafte Anordnung dar.

Vielmehr kann Konstruktions-, Einsatz- und/oder Anwendungsbedingt die zweite Aufnahmeeinheit auch oberhalb der ersten Aufnahmeeinheit angeordnet sein.

Die erste Aufnahmeeinheit mit der Schneckenwelle und die zweite Aufnahmeeinheit mit dem Schneckenrad müssen so angeordnet sein, dass die Verzahnung der Schneckenwelle und des Schneckenrads zueinander in Kontakt stehen und die Zähne ineinandergreifen, so dass ein Drehmoment zwischen der Schneckenwelle und dem Schneckenrad übertragen wird.

Die Verbindung der ersten Aufnahmeeinheit und der zweiten Aufnahmeeinheit erfolgt durch Führungsbolzen. Die Führungsbolzen dienen dazu, um eine bewegliche Verbindung zwischen der ersten Aufnahmeeinheit und der zweiten Aufnahmeeinheit zu gewährleisten. Hierdurch wird die axiale Bewegung der radial gelagerten Schneckenwelle in Bezug auf das Schneckenrad umgesetzt. Die Führungsbolzen umfassen an ihren Enden ein Gewinde zur Aufnahme eines Befestigungselements und zur Verbindung des Führungsbolzens mit der zweiten Aufnahmeeinheit.

Erfindungsgemäß werden die Führungsbolzen durch die erste Aufnahmeeinheit wenigstens teilweise aufgenommen. Über das Gewinde am zweiten Ende des Führungsbolzens wird das zwischen der ersten Aufnahmeeinheit und dem Befestigungsmittel liegende Federelementdurch das Befestigungsmittel befestigt. Über das Gewinde am ersten Ende des Führungsbolzens wird die zweite Aufnahmeeinheit mit dem Führungsbolzen verbunden.

Erfindungsgemäß nimmt das am zweiten Ende des Führungsbolzens zwischen der ersten Aufnahmeeinheit und dem Befestigungsmittel angeordnete Federelement den Führungsbolzen wenigstens teilweise auf.

In einer Ausführungsform ist insbesondere das zwischen der ersten Aufnahmeeinheit und dem Befestigungsmittel angeordnete Federelement in einem Federgehäuse aufgenommen.

Bevorzugt weist das Federgehäuse eine im wesentlichen zylinder-symmetrische Außengeometrie mit einer innenliegenden Durchführung auf, die den Führungsbolzen wenigstens teilweise aufnimmt. Die Durchführung im Federgehäuse erstreckt sich zentrisch entlang der Rotationsachse des aufgenommenen Führungsbolzens. Weiterhin weist das Federgehäuse eine um den Außendurchmesser des Federelements vergrößerte Ausnehmung zur Aufnahme des Federelements auf. Die Höhe der Ausnehmung entspricht vorzugsweise dem Federweg des Federelements, bei dem das Federelement vorzugsweise die maximale Stauchung erfährt und somit mit maximaler Federkraft auf die erste Aufnahmeeinheit wirkt. Dies stellt eine beispielsweise Ausführung der Ausnehmung dar und kann entsprechend anderer Art von Federelemente auch in der Höhe entsprechend des verwendeten Federelements variieren. Die Ausnehmung ist auf der mit der ersten Aufnahmeeinheit in Kontakt stehenden Federgehäuseseite eingebracht. Bevorzugt stellt das mit dem Befestigungsmittel befestigte Federgehäuse eine Begrenzung für den Federweg des Federelements bereit, wodurch die Federkraft bei maximaler Vorspannung auf die erste Aufnahmeeinheit wirkt und bei Drehmomentspitzen im Schneckenantrieb eine Stauchung des Federelements bis zu einem eingestellten Federweg bereitstellt.

Bei einer Ausführungsform der Erfindung ist das Federelement ausgewählt aus einer Gruppe enthaltend Tellerfedern, Schraubenfedern, Kegelfedern, Druckfedern, Federn aus Gummi und/oder Elastomeren und/oder Polyurethan, Metallfedern, faserverstärkte Kunststofffedern, Gasfedern.

Bevorzugt ist das Federelement als eine Tellerfeder ausgeführt. Tellerfedern sind flache, kegelförmige Ringschalen, die in Achsrichtung belastet werden und sowohl mit als auch ohne Auflageflächen gefertigt werden (DIN2093). Tellerfedern weisen in der Regel über die gesamte Fläche eine konstante Tellerdicke auf, wodurch eine Lasteinleitung gleichmäßig über den oberen Innen- und den unteren Außenrand verteilt erfolgt. Vorteilhafterweise sind Tellerfedern standardisiert und in einer großen Vielzahl an Federkraft und Abmessung verfügbar, so dass eine Vorspannung durch die Tellerfeder an unterschiedliche Anwendungsbereiche des Schneckenantriebs angepasst bzw. dimensioniert werden kann. Weiterhin vorteilhaft ist, das Tellerfedern eine große Federkraft bei kleinem Federweg aufweisen, wodurch der Aufbau bzw. die Dimensionierung im Vergleich zu konventionellen Schneckenantrieben nicht vergrößert wird. Weiterhin zeichnen sich Tellerfedern bei entsprechender Dimensionierung durch eine hohe Lebensdauer aus, was die Kosten für Wartung und Instandhaltung minimiert.

In einer Ausführungsform besteht das Federelement aus einer einzelnen Tellerfeder. Vorteilhafterweise können Tellerfedern aufgrund des geringen Platzbedarfs in vielfältiger Weise zu Paketen aus gleichsinnigen geschichteten Einzeltellern oder auch zu Federsäulen aus wechselsinnig geschichteten Einzeltellern bzw. Paketen zusammensetzen. Durch Federpakete mit n-gleichen Tellern wird vorteilhafterweise die rechnerische Einzelkraft um das n-fache bei gleichbleibender Einfederung vergrößert. Durch Federsäulen mit m-wechselsinnig geschichteten Einzeltellern wird vorteilhafterweise die Einfederung um das m-fache bei gleichbleibender Federkraft vergrößert.

Gemäß einer weiteren besonders bevorzugten Ausführungsform der vorliegenden Erfindung werden vorzugsweise Federn, Federelemente oder Federpakete verwendet, welche einen Arbeitsbereich aufweisen, der bezüglich der Federkraft zwischen 10 N und 1000 N vorzugsweise zwischen 10 N und 100 N und insbesondere zwischen 30 N und 70 N liegt und einen Federweg aufweisen, der zwischen 0,01 mm und 10 mm, vorzugsweise zwischen 0,001 mm und 1 mm und insbesondere zwischen 0,01 und 0,2 mm liegt. Bei einem solchen Arbeitsbereich liegt ferner gemäß der besonders bevorzugten Ausführungsform der vorliegenden Erfindung die Steifigkeit des Federelements, der Feder oder des Federpaketes in einem Bereich zwischen 10 N/mm und 200 N/mm, vorzugsweise zwischen 20 N/mm und 100 N/mm und insbesondere zwischen 30 N/mm und 90 N/mm, welche insbesondere am sogenannten Idealpunkt bestimmbar ist.

Bevorzugt ist das Federelement derart ausgelegt, dass bei maximaler Vorspannung und somit bei maximalen Eingriff der Verzahnung der Schneckenwelle in die Verzahnung des Schneckenrades zwischen der ersten Aufnahmeeinheit und der mit der ersten Aufnahmeeinheit in Kontakt stehenden Federgehäuseseite ein Abstand (vorzugsweise ein Luftspalt) ausgebildet ist. Im Zustand der maximalen Vorspannung liegen die Verzahnungsflanken der Verzahnung der Schneckenwelle und des Schneckenrads aneinander an, wodurch der Schneckenantrieb im Nominalbetrieb spielfrei ist.

Der Abstand (vorzugsweise ein Luftspalt) entspricht dem maximalen Verfahrweg der Vorspannung, wodurch vorteilhafterweise Rundlaufabweichungen und/oder die unterschiedlichen Materialwärmekoeffizienten, sowie Drehmomentspitzen ausgeglichen werden.

Beispielsweise verringert sich der Abstand zwischen der ersten Aufnahmeeinheit und dem Federgehäuse, wenn eine Drehmomentspitze mit einer höheren Kraft als die durch das Federelement auf die erste Aufnahmeeinheit wirkende Federkraft auftritt. Vorteilhafterweise wird somit durch das Einfedern des Federelements die Reibkraft zwischen den Verzahnungen und somit auch die Reibung verringert. Dies minimiert den Verschleiß des Schneckenantriebs. Liegt die Federkraft der Vorspannung bei abnehmender Drehmomentspitze über deren Krafteinwirkung, so wird die erste Aufnahmeeinheit und somit der Verzahnung der Schneckenwelle in die Verzahnung des Schneckenrades hineingedrückt und der Abstand (vorzugsweise ein Luftspalt) zwischen der ersten Aufnahmeeinheit und dem Federgehäuse vergrößert sich.

Durch die mit dem Federelement auf die erste Aufnahmeeinheit voreingestellte Vorspannung werden die Verzahnungsflanken der Verzahnung der Schneckenwelle derart in die Verzahnung des Schneckenrads gestellt, so dass der Schneckenantrieb nahezu im Nominalbetrieb spielfrei ist, aber die Reibung zwischen den Verzahnungsflanken und somit auch der Verschleiß auf ein Minimum reduziert ist.

Erfindungsgemäß ist die erste Aufnahmeeinheit in der Erstreckungsrichtung der Führungsbolzen bewegbar. Die Führungsbolzen erstrecken sich direkt an den Lagern der Schneckenwelle anliegend von der zweiten Aufnahmeeinheit mit dem Schneckenrad in Richtung der ersten Aufnahmeeinheit mit der Schneckenwelle verlaufend. Die erste Aufnahmeeinheit ist entlang den Führungsbolzen in Richtung der zweiten Aufnahmeeinheit bewegbar. Diese Bewegung resultiert aus der Vorspannung, welche durch die Federelemente auf die erste Aufnahmeeinheit wirkt.

Durch ein auf die Schneckenwelle wirkendes Drehmoment oder durch thermische Ausdehnung der Verzahnung der Schneckenwelle und/oder des Schneckenrads wird die erste Aufnahmeeinheit mit der Schneckenwelle entlang der Führungsbolzen entgegen der wirkenden Vorspannung wirkend, bewegt.

Vorteilweise wird die erste Aufnahmeeinheit mit Schneckenwelle durch die Tellerfedern mit justierbarem Anschlage entlang der Führungsbolzen in Richtung des Schneckenrads bewegt, so dass die Verzahnung der Schneckenwelle mit einem spezifischen Druck in die Verzahnung des Schneckenrads eingreift und das Spiel auf ein festgelegtes Minimum reduziert bzw. hierdurch ein Spiel beseitigt ist. Das festgelegte Minimum liegt hierbei in einem Bereich, bei dem die Verzahnungsflanken der Schneckenwelle und des Schneckenrads ineinander eingreifen und zueinander anliegen, die Reibung aber noch in einem vertretbaren Bereich liegt.

Weiterhin vorteilhaft ist, dass sich bei Drehmomentspitzen mit einer Kraft größer der Federkraft des Federelements, die erste Aufnahmeeinheit mit der Schneckenwelle entgegen der Wirkungsrichtung der Vorspannung von der zweiten Aufnahmeeinheit entlang der Führungsbolzen bewegt, so dass sich bei dem Schneckenantrieb ein Spiel zwischen den Zahnflanken einstellt, welches einem mit "Standard Spiel" festeingestelltem Schneckenantrieb entspricht.

Bei einem Sinken der durch die Drehmomentspitze wirkenden Kraft auf einen Wert unterhalb der Vorspannung, wird die erste Aufnahmeeinheit mit der Schneckenwelle wieder entlang der Führungsbolzen in Richtung derzweiten Aufnahmeeinheit mit dem Schneckenrad bewegt, bis die Verzahnungen ineinander eingreifen.

Gemäß der Erfindung weist der Schneckenantrieb wenigstens vier Führungsbolzen zur lösbaren Verbindung der ersten Aufnahmeeinheit mit der zweiten Aufnahmeeinheit auf. Der

Schneckenantrieb weist eine gerade Anzahl von Führungsbolzen zur lösbaren Verbindung der ersten Aufnahmeeinheit mit der zweiten Aufnahmeeinheit auf. Die Führungsbolzen ermöglichen hierbei die bewegliche Verbindung zwischen der ersten und der zweiten Aufnahmeeinheit, wodurch die axiale Bewegung der ersten Aufnahmeeinheit mit der radial gelagerten Schneckenwelle im Bezug zur zweiten Aufnahmeeinheit mit dem Schneckenrad ermöglicht wird. Die Führungsbolzen sind dabei in der Regel kontinuierlich hohen mechanische Belastungen ausgesetzt und müssen dementsprechend eine hohe Festigkeit aufweisen, um die notwendige möglichst lange Lebensdauer zu gewährleisten. Erfindungsgemäß verteilt sich die auf die Führungsbolzen wirkenden hohen mechanischen Belastungen bei einer geraden Anzahl von verwendeten Führungsbolzen gleichmäßig, so dass die Belastungen minimiert und eine lange Lebensdauer gewährleistet ist. Weiterhin ergibt sich durch die Verwendung von vier Führungsbolzen eine gleichmäßige Bewegung und Führung der ersten Aufnahmeeinheit, so dass ein mögliches Verkanten während der Bewegung unterbunden wird.

In einer Ausführungsform des Schneckenantriebs weisen die Führungsbolzen zur Befestigung dieser Befestigungsmittel auf, welche eine Einstellmutter und eine Sicherung der Einstellmutter umfassen. Die Sicherung der Einstellmutter ist ausgewählt aus einer Gruppe enthaltend selbstsichernde Einstellmutter, verstiftete Einstellmutter, Klebstoffsicherung der Einstellmutter, Drahtsicherung der Einstellmutter, Kontermutter, Kunststoffsicherungsring, Locktix, Keilsicherungsscheibenpaar, Sicherungsscheibe -oder Blech und Sprengring.

Am zweiten Ende des Führungsbolzens wird dieser mit Hilfe eines Befestigungsmittels an der ersten Aufnahmeeinheit befestigt. Zwischen dem Befestigungsmittel und der ersten Aufnahmeeinheit ist das Federgehäuse mit Federelement angeordnet. Das Befestigungsmittel umfasst eine Einstellmutter welche durch eine Sicherung gegen selbstständiges Lösen der Verbindung gesichert ist.

Gemäß der Erfindung weisen wenigstens die Hälfte und wenigstens zwei der verwendeten Führungsbolzen eine Gleitbuchse auf. Die Gleitbuchse ist ein zylinderförmiges Bauteil, das in die für die Führungsbolzen vorgesehenen Durchgangsbohrung in der ersten Aufnahmeeinheit eingebracht ist. Die Gleitbuchse ist derart in die Durchgangsbohrung in der ersten Aufnahmeeinheit eingebracht, so dass diese fest und nicht zerstörungsfrei von der ersten Aufnahmeeinheit abgetrennt werden kann. Erfindungsgemäß sind in jeder Durchgangsbohrung, in der Gleitbuchsen vorgesehen sind, jeweils zwei Gleitbuchsen, wenigstens am jeweiligen Ende der für den Führungsbolzen vorgesehenen Durchführung in die erste Aufnahmeeinheit eingebracht.

Die Führungsbolzen werden durch die Gleitbuchsen wenigstens teilweise aufgenommen und enthalten selbst keine beweglichen Teile. Die Gleitfläche der Gleitbuchse ist zylindrisch ausgebildet, wodurch eine lineare Bewegung der ersten Aufnahmeeinheit entlang der Erstreckungsrichtung der Führungsbolzen erfolgt. Vorteilhafterweise erfolgt durch die Gleitbuchsen eine präzise, reibungsarme und Verschleißfreie Führung der ersten Aufnahmeeinheit. Das reibungsarme und verschleißfreie Gleiten kann durch einen Schmierfilm erleichtert sein.

Um eine Überbestimmung der Lagerung der ersten Aufnahmeeinheit zu vermeiden, weisen nur zwei der beispielsweise vier verwendeten Führungsbolzen eine Gleitbuchse mit Spielpassung auf. Die zwei weiteren Führungsbolzen weisen ein größeres Übermaß auf und werden vorzugsweise nicht zur Führung der ersten Aufnahmeeinheit genutzt. Dieser Beispielhafte Aufbau stellt keine Einschränkung des erfinderischen Schneckenantriebs dar. Vielmehr kann die erste Aufnahmeeinheit eine gerade Vielzahl von Durchgangsbohrungen zur Aufnahme von Gleitbuchsen und Führungsbolzen aufweisen. Erfindungsgemäß weist jeweils die Hälfte der Vielzahl von Durchgangsbohrungen eine Gleitbuchse mit Spielpassung auf und die andere Hälfe ist mit einem größeren Übermaß ausgelegt.

Die Führungsbolzen, welche eine Gleitbuchse aufweisen, sind zueinander diagonal an der ersten Aufnahmeeinheit angeordnet und durch die Befestigungsmittel an der ersten Aufnahmeeinheit befestigt. Durch die diagonale Anordnung der Führungsbolzen mit Gleitbuchsen wird eine gleichmäßige Bewegung der ersten Aufnahmeeinheit entlang der Erstreckungsrichtung der Führungsbolzen ermöglicht und einwirkende Kräfte/Belastungen, sowie ein Verkanten der ersten Aufnahmevorrichtung reduziert.

In einer weiteren Ausführungsform des erfindungsgemäßen Schneckenantriebs weisen die radialen Führungsbolzen mit Gleitbuchse eine Spielpassung, insbesondere eine Spielpassung mit engem Laufsitz oder Laufsitz auf. Bei der Spielpassung ist hierbei das Kleinstmaß des Innendurchmessers der Bohrung in der Gleitbuchse immer größer, in Grenzfall auch gleich, wie das Größtmaß, der Außendurchmesser der radialen Führungsbolzen. Das Spiel zwischen den radialen Führungsbolzen und der Gleitbuchse liegt in einem Bereich von minimal 0,003 mm und maximal 0,086 mm. Durch die Lagerung der radialen Führungsbolzen erfolgt die Führung bzw. eine geführte Bewegung der ersten Aufnahmeeinheit in Erstreckungsrichtung der radialen Führungsbolzen.

Passungen entstehen durch die Beziehungen der gepaarten Toleranzfelder zueinander und stellen bei entsprechend gleichem Nennmaß eine bestimmte Funktion, beispielsweise Gleit- und Führungsaufgaben, aber auch eine Austauschbarkeit sicher. Durch die Zuordnung von Toleranzfeldlage und Toleranzfeldgröße (Grundtoleranz) wird bestimmt, welche Passungsart mit welchem Spiel bzw. Übermaß vorliegt. Es wird hier beispielsweise zwischen den Passungssystemen Einheitsbohrung und Einheitswelle unterschieden. Die Lage des Toleranzfeldes zum Nennmaß (Nulllinie) wird durch das Grundmaß bestimmt. Das Grundmaß ist jenes obere oder untere Abmaß, dass der Nulllinie am nächsten liegt. Die Bezeichnung der Toleranzfeldlage bei Innenmaßen erfolgt durch Großbuchstaben und bei Außenmaßen mit Kleinbuchstaben (ISO 286).

Führungsbolzen in der Ausführung mit Gleitbuchse weisen eine Spielpassung mit engem Laufsitz beispielsweise wenigstens G7/h6 oder H7/g6 auf oder eine Spielpassung mit Laufsitz beispielsweise wenigstens H7/f7 oder F8/h6 oder H8/f7 oder F8/h9 auf.

In einer weiteren Ausführungsform des erfindungsgemäßen Schneckenantriebs weisen die Führungsbolzen ohne Gleitbuchse eine Spielpassung, insbesondere eine Spielpassung mit leichtem Laufsitz oder weitem Laufsitz auf. Diese Führungsbolzen übernehmen keine direkte Führungsrolle in der Bewegung der ersten Aufnahmeeinheit. Vielmehr wird die Stabilität und Festigkeit der Verbindung zwischen der ersten Aufnahmeeinheit und der zweiten Aufnahmeeinheit verbessert. Durch die Auslegung der Hälfte der Führungsbolzen mit Gleitbuchse und der anderen Hälfte ohne Gleitbuchse wird eine Überbestimmung der Lagerung vermieden. Das Spiel zwischen den radialen Führungsbolzen und der Durchgangsbohrung in der ersten Aufnahmeeinheit liegt in einem Bereich von minimal 0,1 mm und maximal 0,3 mm, bevorzugt beträgt das Spiel 0,2 mm.

Führungsbolzen in der Ausführung ohne Gleitbuchse weisen eine Spielpassung mit leichtem Laufsitz beispielsweise wenigstens H8/e8 oder E9/h9 auf oder eine Spielpassung mit weitem Laufsitz beispielsweise wenigstens H8/d9 oder D10/h9 oder H11/d9 oder D10/h11 auf.

In einer weiteren Ausführungsform der Erfindung übt das Federelement über die Federkraft auf die erste Aufnahmeeinheit eine Vorspannung im Bereich von 10 N bis 100 N, bevorzugt in einem Bereich von 30 N bis 70 N, besonders bevorzugt von 50 N aus.

Unter der Federkraft ist die Kraft zu verstehen, welche entsteht, wenn ein elastischer und verformbarer Körper, beispielsweise eine Tellerfeder, durch äußere Einflüsse auseinandergezogen/gestreckt oder zusammengedrückt/gestaucht wird. Durch die äußeren Einflüsse wirkt in der Tellerfeder eine entgegengesetzte Kraft, mit der die Tellerfeder in ihre ursprüngliche Form zurückgesetzt werden soll. Die Stärke der entgegenwirkenden Federkraft der Tellerfeder hängt von der Strecke ab, um die die Tellerfeder gestreckt oder gestaucht wird. Je länger die Strecke ist, desto stärker ist die entgegenwirkende Federkraft der Tellerfeder.

Wirken auf den Schneckenantrieb Drehmomentspitzen mit einer Kraft größer der Federkraft des Federelements, wird die erste Aufnahmeeinheit entlang der Erstreckungsrichtung der Führungsbolzen in Richtung der ersten Aufnahmeeinheit bewegt, so dass sich ein Spiel zwischen den Verzahnungsflanken der Schneckenwelle und dem Schneckenrad einstellt. In diesem Zustand erfährt das Federelement eine Stauchung. Bei einem Sinken der durch die Drehmomentspitze wirkenden Kraft auf einen Wert geringer als die Federkraft, wird die erste Aufnahmeeinheit entlang der Erstreckungsrichtung der Führungsbolzen in Richtung der zweiten Aufnahmeeinheit bewegt. Die Bewegung ergibt sich aus der Wirkung der Federkraft auf die erste Aufnahmeeinheit und einem gleichzeitigen Entspannen des Federelements.

Unter der Vorspannung ist eine ohne äußere Einflüsse in beispielsweise elastischen Körpern vorhandene Spannung, die bei einer Montage in diese, beispielsweise durch weitere Mittel, eingebracht wird und im Lastfall ein gewünschtes Verhalten zeigt. Vorteilhafterweise kann beispielsweise das Federelement mittels eines Anschlags vorgespannt werden, wodurch das Federelement auf eine permanent anliegende Federkraft eingestellt ist. Somit können beispielsweise Tellerfedern so eingestellt werden, dass diese erst bei einer bestimmten Drehmomentspitze gestaucht werden. Vorteilhafterweise kann somit die Vorspannung eingestellt werden, womit die erste Aufnahmeeinheit mit der Schneckenwelle in Richtung des Schneckenrads bewegt wird, um das Spiel zwischen den Verzahnungsflanken soweit zu minimieren, dass der erfinderische Schneckenantrieb für präzise Stellanwendungen verwendet werden kann.

Weiterhin kann durch den Anschlag der Federweg der Tellerfedern und somit die Federkraft eingestellt wird. Vorteilhafterweise wirkt hierdurch eine beständige Vorspannung auf die erste Aufnahmeeinheit. Der Anschlag kann beispielsweise durch Passscheiben ausgebildet sein.

Weiterhin weist das vorgespannte Federelement eine Federkraft auf, die erst bei spezifischen Drehmomentspitzen überdrückt wird, wodurch sich ein Spiel zwischen den Verzahnungsflanken der Schneckenwelle und dem Schneckenrad einstellt und die Reibung zwischen den Verzahnungsflanken reduziert.

In erfinderischer Weise hat die Anmelderin die Federkraft des Federelements derart bestimmt, dass eine Vorspannung in einem Bereich zwischen 1 % bis 20 % des Nominalwerts des Schneckenantriebs, bevorzugt in einem Bereich zwischen 5 % bis 15 % des Nominalwerts des Schneckenantriebs, besonders bevorzugt 10 % des Nominalwerts des Schneckenantriebs erreicht wird. In diesem Bereich wird die Verzahnung der Schneckenwelle in die Verzahnung des Schneckenrads hineingedrückt, sodass die jeweiligen Verzahnungsflanken aneinander anliegen. Damit ist die Verzahnung im Nominalbetrieb bei Einwirkungen von beispielsweise Vibrationen Spielfrei und die durch die Vorspannung einwirkende Reibung auf ein vertretbares Minimum beschränkt.

Bei thermischen Ausdehnungen der Schneckenwelle und/oder des Schneckenrades und deren Verzahnung, wirkt ebenfalls eine Kraft gegen die Federkraft des Federelements. Ist die wirkende Kraft größer als die Federkraft, wird diese überdrückt und die erste Aufnahmeeinheit mit der Schneckenwelle wird vom Schneckenrad wegbewegt. Hierbei erfahren die Federelemente eine Stauchung, welche soweit erfolgt, dass die Federelemente in den eingestellten Anschlag bewegt wird. Bei Abnahme der thermischen Ausdehnungen, wird die erste Aufnahmeeinheit durch die durch die Vorspannung in Richtung der zweiten Aufnahmeeinheit bewegt.

In erfinderischer Weise hat die Anmelderin die Federkraft des Federelements derart bestimmt, so dass eine Vorspannung für das Schneckengetriebe bereitgestellt wird und dieses bei thermischen Ausdehnungen in einem Temperaturbereich zwischen -60° C bis +90° C, insbesondere in einem Temperaturbereich zwischen -50° C bis +80° C, bevorzugt in einem Temperaturbereich von -40° C bis +75° C betreibar ist.

In einer weiteren Ausführungsform des erfindungsgemäßen Schneckenantriebs stellt das Federelement einen Federweg in einem Bereich zwischen 0,01 mm bis 0,2 mm, insbesondere in einem Bereich zwischen 0,03 mm bis 0,15 mm, bevorzugt in einem Bereich zwischen 0,05 mm bis 0,1 mm bereit. Vorteilhafterweise wird durch die über den Federweg bereitgestellte Federkraft, das Spiel zwischen den Verzahnungsflanken der Schneckenwelle und dem Schneckenrad minimiert.

In erfindungsgemäßer Weise ist bekannt geworden, dass der mittels Passscheiben auf die bevorzugten Bereiche eingestellt Federweg des Federelements, die von den Herstellern angegebenen Rundlaufabweichungen der Schneckenantriebe von beispielsweise 0,03 mm und die zugleich unterschiedlichen Wärmekoeffizienten in einem Temperaturbereich von -40 °C bis 72 °C ausgleicht. Durch den im bevorzugten Bereich bereitgestellten Federweg, wirkt eine beständige Vorspannung auf die erste Aufnahmeeinheit, so dass die Verzahnung der Schneckenwelle in die Verzahnung des Schneckenrads eingreift und der Schneckenantrieb im Nominalfall bei Einwirkungen von beispielsweise Vibrationen Spielfrei und die durch die auf Vorspannung einwirkende Reibung auf ein vertretbares Minimum beschränkt ist. Durch den spielfreien Betrieb des Schneckenantriebs, bei zugleich unterschiedlichen Wärmekoeffizienten, wird eine Verwendung des erfinderischen Schneckenantriebs für präzise Stellanwendungen ermöglicht.

In einer Ausführungsform des Schneckentriebs weisen die Schneckenwelle und das Schneckenrad eine Verzahnung mit Verzahnungsflanken auf. Im einfachsten Fall kann das Schneckenrad als ein schräg verzahntes Stirnrad ausgeführt sein. Damit eine Linienberührung anstatt einer Punktberührung zwischen den Verzahnungsflanken der Schneckenwelle und dem Schneckenrad in dem Schneckenantrieb gewährleistet ist, wird die Verzahnung des Schneckenrads hohl ausgeführt.

Die Verzahnung der Schneckenwelle ähnelt einem Gewinde auf einer Schraube. Die Schneckenwelle ähnelt demzufolge einem Stirnrad mit wenigen sehr schrägen Verzahnungen, die schraubenförmig um die zylindrische Schneckenwelle gewunden sind. Eine Windung der zylindrischen Schneckenwelle entspricht somit einem Zahn der Verzahnung der Schneckenwelle. Während der Eingriffsbewegung gleiten die Verzahnungsflanken der Schneckenwelle und des Schneckenrads aufeinander ab. Im Eingriffspunkt wälzen die Verzahnungsflanken vorwiegend aufeinander, wobei aber auch ein geringfügiges gegeneinander Gleiten erfolgt.

Erfindungsgemäß bewegt das Federelement die erste Aufnahmeeinheit und somit die Verzahnung der Schneckenwelle in Richtung der Verzahnung des Schneckenrades, so dass die Verzahnungsflanken der Schneckenwelle in die Verzahnungsflanken des Schneckenrades eingreifen und der Abstand zwischen den Verzahnungsflanken minimiert ist.

Vorzugsweise weist die Schneckenwelle und das Schneckenrad eine Evolventenverzahnung auf. Weitere Verzahnungsausführungen werden durch die beispielhafte Ausführungsform nicht ausgeschlossen. Die Evolventenverzahnung weist eine Anzahl von Zähnen mit dazwischenliegenden Zahnlücken auf. Die Zähne erstrecken sich von einem inneren Fußkreisdurchmesser bis zu einem äußeren Kopfkreisdurchmesser. Der Fußkreisdurchmesser stellt hierbei den tiefsten Punkt der Zahnlücken dar und der Kopfkreismesser hierbei den höchsten Punkt der Zähne dar. Die Gesamthöhe der Zähne wird in die Kopfhöhe und Fußhöhe eingeteilt. Der Schnittpunkt zwischen der Kopfhöhe und der Fußhöhe stellt den Wälzpunkt dar. An diesem Punkt bilden zwei Zähne der jeweiligen Verzahnungen einen Formschluss. Der Formschluss geht dabei nicht verloren, wenn der Schneckenantrieb derart ausgelegt ist, dass der nachfolgende Zahn der Schneckenwelle und des Schneckenrads bereits im Eingriff sind, bevor der Eingriff des vorangehenden Zahns der Schneckenwelle und des Schneckenrads abbricht. Durch die erfindungsgemäße Ausführung des Schneckenantriebs mit Vorspannung ist gewährleistet, dass das Spiel zwischen den Verzahnungen der Schneckenwelle und dem Schneckenrad derart ausgebildet ist, so dass der nachfolgende Zahn der Schneckenwelle und des Schneckenrads bereits im Eingriff sind, bevor der Eingriff des vorangehenden Zahns der Schneckenwelle und des Schneckenrads abbricht.

Bevorzugt ist die Vorspannung des erfinderischen Schneckenantriebs derart ausgelegt, dass diese die erste Aufnahmeeinheit mit der Schneckenwelle in Erstreckungsrichtung der Führungsbolzen in Richtung der zweiten Aufnahmeeinheit bewegt, so dass das Spiel zwischen der Verzahnung der Schneckenwelle und des Schneckenrads minimiert ist und die Zähne der jeweiligen Verzahnung einen Formschluss ausbilden. Die Vorspannung ermöglicht vorteilhafterweise den Betrieb des Schneckenantriebs im Nominalbetrieb Spielfrei. Ein voreingestelltes festes Spiel zwischen der Schneckenwelle und dem Schneckenrad ist nicht notwendig.

Besonders bevorzugt wirkt die Vorspannung als Drehmomentendämpfer bei Drehmomentspitzen und bei erhöhter Reibung durch thermische Ausdehnungen zwischen den mechanischen Komponenten. Bei Drehmomentspitzen wird die Vorspannung des Federelements überdrückt und die erste Aufnahmeeinheit bewegt sich entlang der Erstreckungsrichtung der Führungsbolzen in Richtung der ersten Aufnahmeeinheit. Zwischen den Verzahnungen der Schneckenwelle und dem Schneckenrad stellt sich ein auf erfinderischer Weise ermitteltes Spiel ein, so dass die Reibung zwischen den Verzahnungsflanken der Schneckenwelle und dem Schneckenrad auf ein Minimum reduziert ist.

Insbesondere werden auch thermische Ausdehnungen durch unterschiedliche Wärmekoeffizienten in einem Temperaturbereich von -40°C bis +75°C ausgeglichen. Hierbei wirkt die Vorspannung als Ausgleich, indem diese durch die erhöhte Reibung zwischen den Verzahnungsflanken der Schneckenwelle und dem Schneckenrad aufgrund thermischer Ausdehnungen überdrückt wird und sich somit ein minimales Spiel zwischen der Schneckenwelle und dem Schneckenrad einstellt.

In einer Ausführungsform des erfindungsgemäßen Schneckenantriebs weist das Federgehäuse einen justierbaren Anschlag auf. Der justierbare Anschlag begrenzt die maximale Einfederung bzw. maximale Stauchung des Federelements, welches dieses bei thermischen Ausdehnungen der mechanischen Komponenten und/oder Drehmomentspitzen erfährt. Erfindungsgemäß wird bei thermischen Ausdehnungen der mechanischen Komponenten und/oder Drehmomentspitzen, die Federkraft überdrückt, wodurch die erste Aufnahmeeinheit mit der Schneckenwelle entlang der Erstreckungsrichtung der Führungsbolzen in Richtung der ersten Aufnahmeeinheit bewegt wird. Dabei verfährt die erste Aufnahmeeinheit in den eingestellten und justierbaren Anschlag. Mit der erfindungsgemäßen, einstellbaren Vorspannung, wird die Reibung zwischen den Verzahnungsflanken einwirkende Reibung auf ein vertretbares Minimum beschränkt ist und somit eine Beschädigung bzw. Verschleiß minimiert. Die Justierung des Anschlags und somit die Begrenzung der Einfederung erfolgt mit Passscheiben. Durch den justierbaren Anschlag und die Begrenzung der maximalen Einfederung des Federelements, erfolgt auch die Einstellung der auf die erste Aufnahmeeinheit wirkenden Vorspannung. Bei

Abnahme der Drehmomentspitzen bzw. thermischer Ausdehnung, wird die erste Aufnahmeeinheit durch die Vorspannung in entlang der Erstreckungsrichtung der

Führungsbolzen in Richtung der zweiten Aufnahmeeinheit bewegt und somit ein aufkommendes Spiel zwischen den Verzahnungsflanken der Schneckenwelle und des Schneckenrads minimiert. Je nach Art der Änderung des justierbaren Anschlags ist der Schneckenantrieb somit für gewisse Drehmomentspitzen einstellbar spielfrei und funktioniert bei unterschiedlichen Umgebungs-und/oder Betriebstemperaturen durch Ausgleich der unterschiedlichen Temperaturkoeffizienten der mechanischen Komponenten.

Im Rahmen der Erfindung ist man zu der Erkenntnis gelangt, dass sich durch die Verwendung einer Passscheibe als justierbarer Anschlag des Federelements, eine gesteigerte, den Anforderungen des Schneckenantriebs für präzise Stellanwendungen entsprechende, Einstellbarkeit der Federkraft des Federelements ergibt. Mit dem Einbringen der Passscheibe als justierbarer Anschlag, werden zylinderringförmige Normteile verwendet, welche kostengünstig und hoher Stückzahl, mit verschiedenen Innen- und Außendurchmesserkombinationen und Dicken zur Verfügung stehen.

In einer Ausführungsform des erfindungsgemäßen Schneckenantriebs, ist die drehbewegliche gelagerte Schneckenwelle in einem Festlager und in einem Loslager in der ersten Aufnahmeeinheit angeordnet. Die Lagerungen in einem Festlager und einem Loslager kommt zum Einsatz, um die Schneckenwelle radial abzustützen, in axialer Richtung zu führen und mögliche wärmebedingte Längenänderungen der Schneckenwelle zwangsfrei aufzunehmen. Bei der Lagerung der Schneckenwelle in einer Kombination aus Festlager und Loslager übernimmt das Festlager sowohl die radiale Abstützung als auch die axiale Führung der Schneckenwelle in beide Richtung entlang der Erstreckungsrichtung der Schneckenwelle. Das Festlager ist diesbezüglich sowohl auf der Welle als auch im Gehäuse seitlich festgelegt. Die Loslager am jeweils entgegengesetzten Ende der Schneckenwelle übernehmen nur die radiale Abstützung. Außerdem lassen die Loslager Axialverschiebungen zu, um ein gegenseitiges Verspannen der Lager zu verhindern.

Als Festlager eignen sich Radiallager, welche kombinierte Belastungen aufnehmen können, wie beispielsweise Rillenkugellager, zweireihige bzw. satzweise eingebaute einreihige Schrägkugellager, Pendelkugellager, Pendelrollenlager, zusammengepasste einreihige Kegelrollenlager. Als Loslager eignen sich beispielsweise Toroidalrollenlager, Nadellager und Zylinderrollenlager mit einem bordreien Ring.

Der erfindungsgemäße Schneckenantrieb, insbesondere die hiermit offenbarten Ausführungsformen des erfindungsgemäßen Schneckenantriebs, können als Drehmomenten Dämpfer verwendet werden. Vorteilhafterweise erfolgt somit bei hohen Drehmomentbelastungen (Drehmomentspitzen) durch das Schneckenrad auf die Schneckenwelle eine Entlastung der Mechanik, wenn die Federkraft der Vorspannung und somit des Federelements überwunden wird. Hierbei hebt sich die erste Aufnahmeeinheit mit der Schneckenwelle entgegen der Federkraft des Federelements an und minimiert somit den Reibkontakt zwischen der Schneckenwelle und dem Schneckenrad. Das Anheben der ersten Aufnahmeeinheit bzw. das Vergrößern des Abstands zwischen der Schneckenwelle und dem Schneckenrad hängt von der Höhe der Drehmomentspitze ab. Liegt die Kraft der Drehmomentspitze über der Kraft der Vorspannung mit der Federkraft des Federelements, wird diese überdrückt und die erste Aufnahmeeinheit mit der Schneckenwelle fährt auf den durch den justierbaren Anschlag definierten Endanschlag. Dieser Zustand gleicht dann einem mit einem "mit Standardspiel" fest eingestellten Schneckenantrieb, bei dem nur eine Zahnflanke anliegt. Hierdurch wird eine überhöhte Belastung der mechanischen Komponenten und somit auch der Verschleiß minimiert.

Unter einem "mit Standardspiel" eingestellten Schneckenantrieb sind Schneckenantriebe zu verstehen, bei denen das Abstand und somit das Spiel zwischen der Schneckenwelle und dem Schneckenrad entsprechend vorgegebenen Betriebsparametern fest eingestellt ist und Anpassungen aufwendig und manuell mit einem Werkzeug erfolgen.

Durch ein Absinken der durch die Drehmomentspitze erzeugten Kraft unter die durch die Vorspannung auf die erste Aufnahmevorrichtung ausgeübte Kraft, werden die Zahnflanken der Schneckenwelle wieder in das Schneckenrad gedrückt. Der Schneckenantrieb weist somit zwischen den Zahnflanken der Schneckenwelle und dem Schneckenrad wieder ein auf ein Minimum reduziertes Spiel auf, wobei die Reibung zwischen den Verzahnungsflanken und somit der Verschleiß auf ein Minimum reduziert ist.

Weitere Merkmale der vorliegenden Erfindung ergeben sich aus der nachfolgenden Beschreibung von bevorzugten Ausführungsbeispielen des erfindungsgemäßen Schneckenantriebs in

Verbindung mit der Zeichnung. Die geben nur Beispielhaft die Erfindung wider und stellen keine Einschränkung der Erfindungsidee in Bezug auf Abwandlungen dar. Dabei zeigt
- Fig. 1: eine schematische Schnittdarstellung einer Ausführungsform des erfindungsgemäßen Schneckenantriebs 1 in der Seitenansicht;
- Fig. 2: eine schematische Schnittdarstellung der Führungsbolzen 6 mit Gleitbuchse 13 einer Ausführungsform des erfinderischen Schneckenantriebs 1 in der Seitenansicht;
- Fig. 3: eine schematische Darstellung einer Ausführungsform des erfinderischen Schneckenantriebs 1 in der Seitenansicht;
- Fig. 4: eine schematische Schnittdarstellung einer Ausführungsform des Führungsbolzen 6 des erfindungsgemäßen Schneckenantriebs 1;

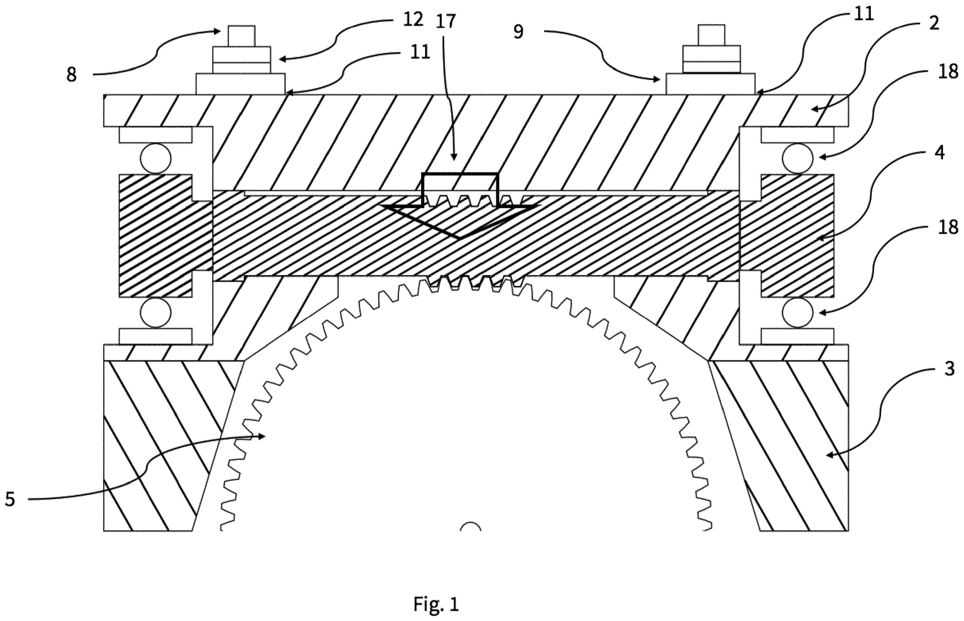

**Fig. 1** zeigt die schematische zweidimensionale Schnittdarstellung einer Ausführungsform des Schneckenantriebs 1 mit einer zweiten Aufnahmeeinheit 3, in der das Schneckenrad 5 gelagert aufgenommen ist. Oberhalb der zweiten Aufnahmeeinheit 3 ist die erste Aufnahmeeinheit 2 angeordnet. In der ersten Aufnahmeeinheit 2 ist die drehbeweglich gelagerte Schneckenwelle 4 in einem Festlager 18 und in einem Loslager 18 angeordnet. Die Achsen der Schneckenwelle 4 und dem Schneckenrad 5 sind um 90° Grad zueinander versetzt angeordnet. Die erste Aufnahmeeinheit 2 ist über die Führungsbolzen 6 mit der zweiten Aufnahmeeinheit 3 beweglich verbunden. Die Führungsbolzens 6 sind an einem ersten Ende 7 mit der zweiten Aufnahmeeinheit 3 verbunden und an einem zweiten Ende 8 über ein Befestigungsmittel 12 an der ersten Aufnahmeeinheit 2 befestigt. In einer alternativen Ausführungsform (nicht dargestellt) können die Führungsbolzen 6 mit der zweiten Aufnahmeeinheit3 über Befestigungsmittel 12 befestigt sein.

Zwischen der ersten Aufnahmeeinheit 2 und den Befestigungsmitteln 12 sind die Federgehäuse 9 angeordnet, welche wenigstens teilweise die Führungsbolzen 6 aufnehmen. Die Federgehäuse 9 stehen in direktem Kontakt mit den Befestigungsmitteln 12 und werden durch diese am zweiten Ende der Führungsbolzen 8 befestigt. Die Befestigungsmittel 12 sind beispielsweise eine Kontermutter und eine Feststellmutter zur Sicherung der Kontermutter. Die Kontermutter ist oberhalb der Federgehäuse 9 angeordnet und die Feststellmutter oberhalb dieser zur Sicherung gegen ungewolltes Lösen. In den Federgehäusen 9 ist das Federelement 10 angeordnet, welches wenigstens teilweise den Führungsbolzen 6 aufnimmt.

Die erste Aufnahmeeinheit 2 ist durch die Summe der Vielzahl der Federelemente 10 entlang der Erstreckungsrichtung der Führungsbolzen in Richtung der zweiten Aufnahmeeinheit 3 bewegbar. Durch die Bewegung der ersten Aufnahmeeinheit 2 mit der Schneckenwelle 4 in Richtung der zweiten Aufnahmeeinheit 3 mit dem Schneckenrad 5, wird das Spiel zwischen den Verzahnungen der Schneckenwelle 4 und dem Schneckenrad 5 vorteilhafterweise minimiert. Zwischen dem Federgehäuse 9 und der Oberfläche der ersten Aufnahmeeinheit 2, welche in Kontakt mit dem Federgehäuse 9 steht, ist ein Abstand 11 ausgebildet. Der Abstand 11 zwischen der mit dem Federgehäuse 9 in Kontakt stehenden Oberfläche der ersten Aufnahmeeinheit 2 und dem Federgehäuse 9 ergibt sich aus der Summe der Federelemente 10 resultierenden Federkraft 17, welche auf die erste Aufnahmeeinheit 2 gerichtet ist und eine Bewegung der ersten Aufnahmeeinheit 2 in Richtung der zweiten Aufnahmeeinheit 3 bewirkt. Der Abstand 11 stellt das Maß der Bewegung der ersten Aufnahmeeinheit 2 dar und ist maximal bei gleichzeitig minimiertem Spiel zwischen den Verzahnungen der Schneckenwelle 4 und dem Schneckenrad 5.

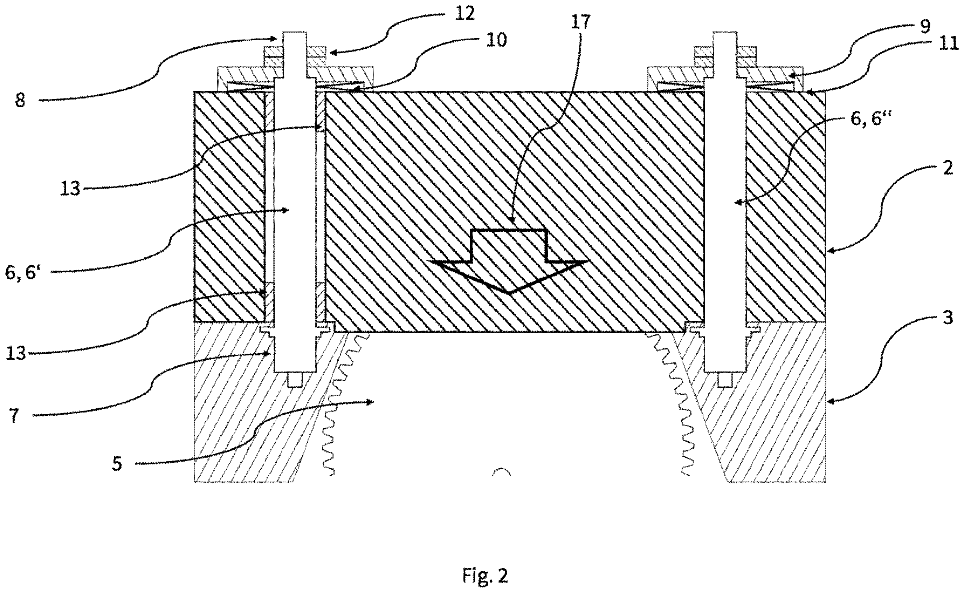

**Fig. 2** zeigt eine schematische zweidimensionale Darstellung einer Ausführungsform des Schneckenantriebs in der Seitenansicht mit den erfindungsgemäßen Führungsbolzen 6 mit Gleitbuchsen 13 im Schnitt. Fig. 2 zeigt die zweite Aufnahmeeinheit 3 mit dem Schneckenrad 4 welche über die Führungsbolzen 6 mit der ersten Aufnahmeeinheit 2 verbunden ist. Die zweite Aufnahmeeinheit ist unterhalb der ersten Aufnahmeeinheit 2 angeordnet und mit dem ersten Ende der Führungsbolzen 6 verbunden.

In Fig. 2 sind die Führungsbolzen 6 wenigstens teilweise durch die zweite Aufnahmeeinheit 3 aufgenommen. Die Führungsbolzen 6 erstrecken sich von der zweiten Aufnahmeeinheit 3 verlaufend in Richtung der ersten Aufnahmeeinheit 2 und werden durch die erste Aufnahmeeinheit 2 wenigstens teilweise aufgenommen. Oberhalb der ersten Aufnahmeeinheit 2 ist das Federgehäuse 9 angeordnet. Das Federgehäuse 9 nimmt den Führungsbolzen 6 wenigstens teilweise auf. Das Federgehäuse 9 ist durch Befestigungsmittel 12 am zweiten Ende des Führungsbolzens 8 befestigt. Die Befestigungsmittel 12 sind beispielsweise eine Kontermutter und eine Feststellmutter zur Sicherung der Kontermutter. Die Kontermutter ist oberhalb des Federgehäuses 9 angeordnet und die Feststellmutter oberhalb dieser zur Sicherung gegen ungewolltes Lösen. Die erste Aufnahmeeinheit 2 weist in der für die Aufnahme der Führungsbolzen 6' vorgesehenen Durchführung Gleitbuchsen 13 auf. Die Gleitbuchsen 13 sind in der ersten Aufnahmeeinheit 2 derart eingelassen, dass die zur Außenseite der ersten Aufnahmeeinheit 2 zeigenden Enden den Gleitbuchsen 13 im Wesentlichen mit der unteren und oberen Oberfläche der ersten Aufnahmeeinheit 3 abschließen. Unter der unteren Oberfläche ist die zur zweiten Aufnahmeeinheit 3 zugewandte Seite der ersten Aufnahmeeinheit 2 zu verstehen und unter der oberen Oberfläche ist die mit dem Federgehäuse 9 in Kontakt stehende Oberfläche der ersten Aufnahmeeinheit 2 zu verstehen.

Die in Fig. 2 dargestellt Ausführungsform soll nicht beschränkend für weitere Ausführungen sein. Beispielsweise können weitere Ausführungsformen auch drei oder eine Vielzahl von Gleitbuchsen an Positionen unterschiedlich zu den in Fig. 2 dargestellten Gleitbuchsen aufweisen. Die Gleitbuchsen 13 nehmen den Führungsbolzen 6' wenigstens teilweise auf. Die Gleitfläche der Gleitbuchse 13 ist zylindrisch ausgebildet, wodurch eine lineare Bewegung der ersten Aufnahmeeinheit 2 entlang der Erstreckungsrichtung der Führungsbolzen 6, 6', 6" erfolgt. Vorteilhafterweise erfolgt durch die Gleitbuchsen 13 eine präzise, reibungsarme und Verschleißfreie Führung der ersten Aufnahmeeinheit 2. Um eine Überbestimmung der Lagerung der ersten Aufnahmeeinheit 2 zu vermeiden, weisen nur zwei Führungsbolzen 6' der verwendeten Führungsbolzen 6 eine Gleitbuchse 13 mit Spielpassung auf. Die zwei weiteren Führungsbolzen 6" weisen ein größeres Übermaß auf und werden nicht zur Führung der ersten Aufnahmeeinheit 2 genutzt. Erfindungsgemäß sind die diagonal gegenüberliegenden Führungsbolzen 6, eine Kombination aus zwei Führungsbolzen 6', welche mit Gleitbuchsen versehen sind. Die Führungsbolzen 6" sind entsprechend auch diagonal zueinander angeordnet. In Ausführungsformen mit einer Vielzahl von Führungsbolzen 6 größer als vier sind diese entsprechend diagonal verteilt, so dass eine Überbestimmung der Lagerung vermieden wird.

In der in Fig. 2 dargestellten Ausführungsform weist die mit der ersten Aufnahmeeinheit 2 in Kontakt stehenden Seite des Federgehäuses 9 eine Materialausnehmung, vorzugsweise im Außendurchmesser des Federelements 10 zur Aufnahme des Federelements 10 auf. In der Materialausnehmung ist das Federfederelement 10, vorzugsweise eine Tellerfeder, aufgenommen. Vorzugsweise wird jeder Führungsbolzen 6 wenigstens teilweise von einem Federgehäuse 9 aufgenommen, und somit von einem Federelement 10. Hierdurch wirkt eine in Summe gleichmäßig gerichtete Federkraft auf die erste Aufnahmeeinheit 2, wodurch diese entlang der Erstreckungsrichtung der Führungsbolzen 6 in Richtung 17 der zweiten Aufnahmeeinheit 3 bewegt wird.

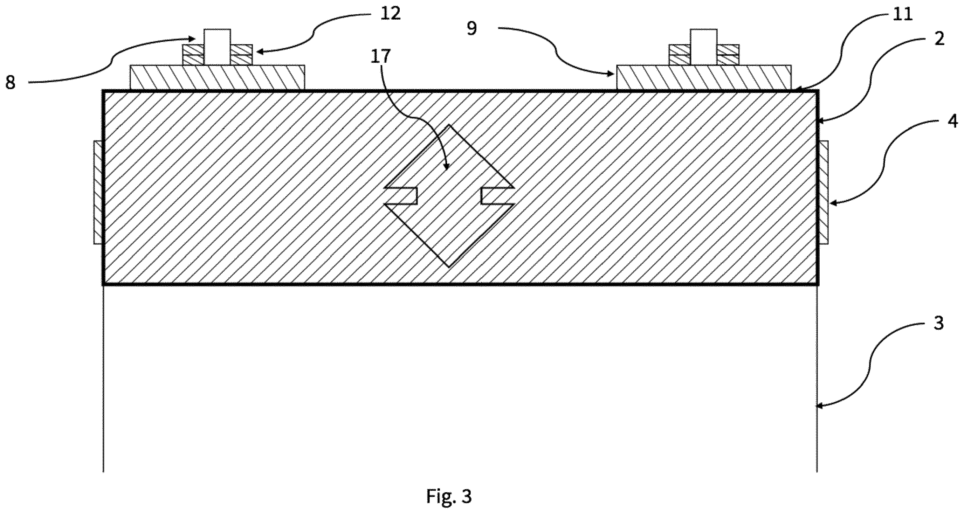

**Fig. 3** zeigt eine schematische Darstellung einer Ausführungsform des erfinderischen Schneckenantriebs 1 mit den erfindungsgemäßen Führungsbolzen 6 und der Federelemente 10 mit Abstand 11 in der Seitenansicht. In Fig. 3 ist die erste Aufnahmeeinheit 2 oberhalb der zweiten Aufnahmeeinheit 3 angeordnet und über Führungsbolzen 6 miteinander verbunden. Die ersten Aufnahmeeinheit 2 ist über Befestigungsmittel 12 mit den Führungsbolzen 6 verbunden. Zwischen den dem Befestigungsmittel 12 und der ersten Aufnahmeeinheit 2 sind die Federgehäuse 9 mit den Federelementen 10 (nicht dargestellt) angeordnet. Durch die Federelemente 10 wirkt eine Federkraft auf die erste Aufnahmeeinheit 2, wodurch diese entlang der Erstreckungsrichtung der Führungsbolzen 6 in Richtung 17 der zweiten Aufnahmeeinheit bewegt wird. Durch das Einwirken von Drehmomentspitzen durch das Schneckenrad auf die Schneckenwelle und/oder thermischen Ausdehnungen, wird die Federkraft des Federelements 10 überdrückt und die erste Aufnahmeeinheit 2 bewegt sich entlang der Erstreckungsrichtung der Führungsbolzen 6 in Richtung 17 der Federgehäuse 9, wodurch der Abstand 11 minimiert wird. Nach dem Abklingen der Drehmomentspitzen und/oder thermischen Ausdehnungen und einer Krafteinwirkung kleiner als die Vorspannung, wird die erste Aufnahmeeinheit 2 durch die Federkraft in Richtung der Aufnahmeeinheit 3 bewegt, wodurch der Abstand 11 vergrößert wird.

Die erste Aufnahmeeinheit 2 führt eine Bewegung 17 aus, welche im maximalen Erstreckungsbereich des Abstands 11 liegt. Dieser liegt vor, wenn die erste Aufnahmeeinheit 2 durch die maximale Vorspannung in Richtung zweiter Aufnahmeeinheit 3 bewegt ist.

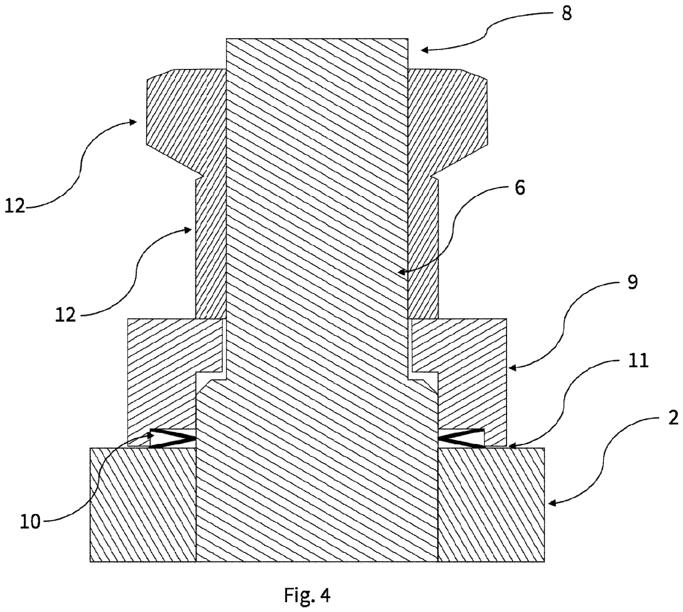

**Fig. 4** zeigt eine schematische zweidimensionale Schnittdarstellung einer Ausführungsform des Führungsbolzen 6 des erfindungsgemäßen Schneckenantriebs 1 mit der ersten Aufnahmeeinheit 2 und einem zweiten Ende des Führungsbolzen 8, wobei der Führungsbolzen 6 wenigstens teilweise von der ersten Aufnahmeeinheit 2 aufgenommen ist. Der Führungsbolzen 6 erstreckt sich von der zweiten Aufnahmeeinheit 3 (nicht dargestellt) in Richtung der ersten Aufnahmeeinheit 2. Oberhalb der ersten Aufnahmeeinheit 2 ist das Federgehäuse 9 angeordnet. Das Federgehäuse 9 nimmt den Führungsbolzen 6 wenigstens teilweise auf. An der mit der ersten Aufnahmeeinheit 2 in Kontakt stehenden Seite des Federgehäuses 9 weist das Federgehäuse 9 eine Materialausnehmung, vorzugsweise im Außendurchmesser des Federelements 10 auf. Die Materialausnehmung ist in Höhe (Erstreckungsrichtung entlang der Erstreckungsrichtung der

Führungsbolzen 6) und Durchmesser derart ausgelegt, dass diese das Federelement 10, vorzugsweise eine Tellerfeder aufnimmt, wodurch eine Vorspannung auf die erste Aufnahmeeinheit 2 bereitgestellt wird.

In Fig. 4 ist das in der Materialausnehmung aufgenommene Federelement 10 in maximaler Entspannung dargestellt, so dass eine Vorspannung in Erstreckungsrichtung der Führungsbolzen 6 in Richtung der ersten Aufnahmeeinheit 2 wirkt und die erste Aufnahmeeinheit 2 in Richtung der zweiten Aufnahmeeinheit 3 (nicht dargestellt) bewegt. Hierdurch bildet sich ein Abstand 11, vorzugsweise ein Luftspalt, zwischen der ersten Ausnahmeeinheit 2 und dem Federgehäuse 9 aus. Durch das Einwirken von Drehmomentspitzen durch das Schneckenrad auf die Schneckenwelle und/oder thermischen Ausdehnungen, wird die Federkraft des Federelements 10 überdrückt und das Federelement 10 wird gestaucht bzw. gespannt. Die erste Aufnahmeeinheit 2 bewegt sich entlang der Erstreckungsrichtung der Führungsbolzen in Richtung des Federgehäuse 9, wodurch der Abstand 11 zwischen dem Federgehäuse 9 und der ersten Aufnahmeeinheit minimiert wird und die erste Aufnahmeeinheit 2 auf den durch den justierbaren Anschlag definierten Endanschlag fährt. Dieses stellt gleichzeitig den Endanschlag für die Bewegung der ersten Aufnahmeeinheit 2 in Richtung des Federgehäuses 9 dar. Zwischen den Verzahnungen der Schneckenwelle 4 (nicht dargestellt) und dem Schneckenrad 5 (nicht dargestellt) stellt sich somit ein auf erfinderischer Weise ermitteltes Spiel ein, so dass die auftretende Reibung zwischen den Verzahnungsflanken der Schneckenwelle und dem Schneckenrad auf ein Minimum reduziert ist. Nach dem Abklingen der Drehmomentspitze und/oder derthermischen Ausdehnungen erfolgt eine Entspannung des Federelements 10, wodurch eine Vorspannung durch die Federkraft des Federelements 10 auf die erste Aufnahmeeinheit 2 wirkt und diese entlang der Erstreckungsrichtung der Führungsbolzen 6 in Richtung der zweiten Aufnahmeeinheit 3 (nicht dargestellt) bewegt. Der Schneckenantrieb 1 weist somit zwischen den Zahnflanken der Schneckenwelle 4 (nicht dargestellt) und dem Schneckenrad 5 (nicht dargestellt) wieder ein auf ein Minimum reduziertes Spiel auf und ist somit für präzise Stellanwendungen verwendbar ist, wobei die Reibung zwischen den Verzahnungsflanken und somit der Verschleiß auf ein Minimum reduziert ist. Darüber hinaus weist das Federgehäuse 9 den justierbaren Anschlag 16 (nicht dargestellt) auf. Des Weiteren wird das Federgehäuse 9 durch die Befestigungsmittel 12 am zweiten Ende des Führungsbolzens 8 befestigt. Die Befestigungsmittel 12 sind beispielsweise eine Kontermutter und eine Feststellmutter zur Sicherung der Kontermutter. Die Kontermutter ist oberhalb des Federgehäuses 9 angeordnet und die Feststellmutter oberhalb dieser zur Sicherung gegen ungewolltes Lösen.

### Bezugszeichenliste

- 1: Schneckenantrieb
- 2: erste Aufnahmeeinheit
- 3: zweite Aufnahmeeinheit
- 4: Schneckenwelle
- 5: Schneckenrad
- 6: Führungsbolzen
- 7: erstes Ende des Führungsbolzens
- 8: zweite Ende des Führungsbolzens
- 9: Federgehäuse
- 10: Federelement
- 11: Abstand
- 12: Befestigungsmittel
- 13: Gleitbuchse
- 14: Vorspannung
- 15: Verzahnung
- 16: Anschlag
- 17: Bewegungsrichtungen der ersten Aufnahmeeinheit
- 18: Lagerung der Schneckenwelle

## Patentansprüche

1. Schneckenantrieb (1) umfassend:
• eine Schneckenwelle (4) und eine erste Aufnahmeeinheit (2), wobei die Schneckenwelle (4) drehbeweglich in der ersten Aufnahmeeinheit (2) gelagert ist;
• ein Schneckenrad (5) und eine zweite Aufnahmeeinheit (3), wobei das Schneckenrad (5) drehbeweglich in der zweiten Aufnahmeeinheit (3) gelagert ist, und
• die erste Aufnahmeeinheit (2) ist auf der zweiten Aufnahmeeinheit (3) angeordnet und die drehbeweglich gelagerte Schneckenwelle (4) der ersten Aufnahmeeinheit (2) steht in Kontakt zur Übertragung eines Drehmoments mit dem Schneckenrad (5) der zweiten Aufnahmeeinheit (3);
• Führungsbolzen (6) zur lösbaren Verbindung der ersten Aufnahmeeinheit (2) mit der zweiten Aufnahmeeinheit (3), wobei die erste Aufnahmeeinheit (2) die Führungsbolzen (6) wenigstens teilweise aufnimmt und die zweite Aufnahmeeinheit (3) mit einem der Führungsbolzen (6), an einem ersten Ende (7) verbunden ist;
wobei an einem zweiten Ende der Führungsbolzen (8) zwischen der ersten Aufnahmeeinheit (2) und einem Befestigungsmittel (12) ein Federelement (10) angeordnet ist,
wobei die Führungsbolzen (6) eine bewegliche Verbindung zwischen der ersten Aufnahmeeinheit (2) und der zweiten Aufnahmeeinheit (3) bereitstellen und die erste Aufnahmeeinheit (2) in der Erstreckungsrichtung der Führungsbolzen (6) bewegbar ist, und wobei die Bewegung der ersten Aufnahmeeinheit (2) eine axiale Bewegung der in der ersten Aufnahmeeinheit (2) radial gelagerten Schneckenwelle (4) in Bezug zur zweiten Aufnahmeeinheit (3) mit dem Schneckenrad (5) entlang der Erstreckungsrichtung der Führungsbolzen (6) umfasst und diese durch die bewegliche Verbindung gewährleistet wird,
und wobei der Schneckenantrieb (1) eine gerade Anzahl an Führungsbolzen (6) zur lösbaren Verbindung der ersten Aufnahmeeinheit (2) mit der zweiten Aufnahmeeinheit (3) aufweist,
**dadurch gekennzeichnet, dass** der Schneckenantrieb (1) wenigstens vier Führungsbolzen (6) zur lösbaren Verbindung der ersten Aufnahmeeinheit (2) mit der zweiten Aufnahmeeinheit (3) aufweist, und wobei die Hälfte der verwendeten Führungsbolzen (6) eine Gleitbuchse (13) aufweisen, und wobei
wenigstens zwei der verwendeten Führungsbolzen (6) eine Gleitbuchse (13) aufweisen, und wobei
die Führungsbolzen (6), welche die Gleitbuchse (13) aufweisen, zueinander diagonal an der ersten Aufnahmeeinheit (2) angeordnet und durch die Befestigungsmittel (12) befestigt sind.

2. Schneckenantrieb (1) nach Anspruch 1, **dadurch gekennzeichnet, dass** das Federelement (10) in einem Federgehäuse (9) aufgenommen ist.

3. Schneckenantrieb (1) nach einem der vorhergehenden Ansprüche, **dadurch gekennzeichnet, dass** das Federelement (10) ausgewählt ist aus einer Gruppe enthaltend Tellerfedern, Schraubenfedern, Kegelfedern, Druckfedern, Federn aus Gummi und/oder Elastomeren und/oder Polyurethan, Metallfedern, faserverstärkte Kunststofffedern, Gasfedern.

4. Schneckenantrieb (1) nach Anspruch 2, **dadurch gekennzeichnet, dass** zwischen der ersten Aufnahmeeinheit (2) und dem Federgehäuse (9) ein Abstand (11) ausgebildet ist.

5. Schneckenantrieb (1) nach einem der vorhergehenden Ansprüche, **dadurch gekennzeichnet, dass** das Befestigungsmittel (12) eine Einstellmutter und eine Sicherung der Einstellmutter ausgewählt aus einer Gruppe enthaltend selbstsichernde Einstellmutter, verstiftete Einstellmutter, Klebstoffsicherung der Einstellmutter, Drahtsicherung der Einstellmutter, Kontermutter, Kunststoffsicherungsring, Locktix, Keilsicherungsscheibenpaar, Sicherungsscheibe -oder Blech, Sprengring, umfasst.

6. Schneckenantrieb (1) nach einem der vorhergehenden Ansprüche, **dadurch gekennzeichnet, dass** das Federelement (10) über die Federkraft auf die erste Aufnahmeeinheit (2) eine Vorspannung (14) im Bereich von 10N bis 100N, bevorzugt in einem Bereich von 30N bis 70N, besonders bevorzugt 50N ausübt.

7. Schneckenantrieb (1) nach einem der vorhergehenden Ansprüche, **dadurch gekennzeichnet, dass** das Federelement (10) einen Federweg in einem Bereich zwischen 0,01 mm bis 0,2 mm, insbesondere in einem Bereich zwischen 0,03 mm bis 0,15 mm, bevorzugt in einem Bereich zwischen 0,05 mm bis 0,1 mm bereitstellt.

8. Schneckenantrieb (1) nach einem der vorhergehenden Ansprüche, **dadurch gekennzeichnet, dass** die Schneckenwelle (4) und das Schneckenrad (5) eine Verzahnung (15) mit Verzahnungsflanken aufweisen.

9. Schneckenantrieb (1) nach Anspruch 8, **dadurch gekennzeichnet, dass** das Federelement (10) die Verzahnung (15) der Schneckenwelle (4) in Richtung der Verzahnung (15) des Schneckenrades (5) bewegt, wobei die Verzahnungsflanken der Schneckenwelle (4) in die Verzahnungsflanken des Schneckenrades (5) eingreifen, so dass der Abstand zwischen den Verzahnungsflanken minimiert ist.

10. Schneckenantrieb (1) nach einem der vorhergehenden Ansprüche 2 oder 4, **dadurch gekennzeichnet, dass** das Federgehäuse (9) einen justierbaren Anschlag (16) aufweist.

11. Schneckenantrieb (1) nach Anspruch 10, **dadurch gekennzeichnet, dass** der justierbare Anschlag (16) des Federelements (10) eine Passscheibe ist.

12. Schneckenantrieb (1) nach einem der vorhergehenden Ansprüche, **dadurch gekennzeichnet, dass** die drehbeweglich gelagerte Schneckenwelle (4) in einer Lagerung (18) aus einer Kombination aus Festlager und Loslager angeordnet ist.

13. Verwendung des Schneckenantriebs (1) nach einem der vorhergehenden Ansprüche als einen Drehmomentdämpfer.

## Claims

1. Worm drive (1) comprising:
• a worm shaft (4) and a first receiving unit (2), the worm shaft (4) being rotatably mounted in the first receiving unit (2);
• a worm wheel (5) and a second receiving unit (3), the worm wheel (5) being rotatably mounted in the second receiving unit (3), and
• the first receiving unit (2) being arranged on the second receiving unit (3) and the rotatably mounted worm shaft (4) of the first receiving unit (2) being in contact with the worm wheel (5) of the second receiving unit (3) in order to transmit a torque;
• guide pins (6) for detachably connecting the first receiving unit (2) to the second receiving unit (3), the first receiving unit (2) at least partly receiving the guide pins (6) and the second receiving unit (3) being connected to one of the guide pins (6) at a first end (7);
a spring element (10) being arranged at a second end of the guide pins (8) between the first receiving unit (2) and a fastening means (12),
the guide pins (6) providing a movable connection between the first receiving unit (2) and the second receiving unit (3) and the first receiving unit (2) being movable in the direction of extension of the guide pins (6), and the movement of the first receiving unit (2) comprising an axial movement of the worm shaft (4), which is radially mounted in the first receiving unit (2), in relation to the second receiving unit (3) together with the worm wheel (5) in the direction of extension of the guide pins (6) and this being ensured by the movable connection,
and the worm drive (1) having an even number of guide pins (6) for detachably connecting the first receiving unit (2) to the second receiving unit (3),
**characterized in that**
the worm drive (1) has at least four guide pins (6) for detachably connecting the first receiving unit (2) to the second receiving unit (3), and
half of the guide pins (6) used having a sliding bush (13), and at least two of the guide pins (6) used having a sliding bush (13), and
the guide pins (6) which have the sliding bush (13) being arranged diagonally relative to one another on the first receiving unit (2) and being fastened by the fastening means (12).

2. Worm drive (1) according to claim 1, **characterized in that** the spring element (10) is received in a spring housing (9).

3. Worm drive (1) according to either of the preceding claims, **characterized in that** the spring element (10) is selected from a group comprising disk springs, coil springs, conical coil springs, compression springs, springs made of rubber and/or elastomers and/or polyurethane, metal springs, fiber-reinforced plastics springs and gas springs.

4. Worm drive (1) according to claim 2, **characterized in that** a distance (11) is formed between the first receiving unit (2) and the spring housing (9).

5. Worm drive (1) according to any of the preceding claims,
**characterized in that** the fastening means (12) comprises an adjusting nut and a locking device of the adjusting nut selected from a group comprising a self-locking adjusting nut, pinned adjusting nut, adhesive locking of the adjusting nut, wire locking of the adjusting nut, jam nut, plastics locking ring, Locktix, pair of wedge thrust washers, locking washer or sheet metal and snap ring.

6. Worm drive (1) according to any of the preceding claims,
**characterized in that** the spring element (10) exerts, via the spring force on the first receiving unit (2), a pretensioning (14) in the range of from 10 N to 100 N, preferably in a range of from 30 N to 70 N, particularly preferably 50 N.

7. Worm drive (1) according to any of the preceding claims,
**characterized in that** the spring element (10) provides a spring deflection in a range of between 0.01 mm and 0.2 mm, in particular in a range of between 0.03 mm and 0.15 mm, preferably in a range of between 0.05 mm and 0.1 mm.

8. Worm drive (1) according to any of the preceding claims,
**characterized in that** the worm shaft (4) and the worm wheel (5) have toothing (15) having toothing flanks.

9. Worm drive (1) according to claim 8, **characterized in that** the spring element (10) moves the toothing (15) of the worm shaft (4) in the direction of the toothing (15) of the worm wheel (5), the toothing flanks of the worm shaft (4) engaging in the toothing flanks of the worm wheel (5) so that the spacing between the toothing flanks is minimized.

10. Worm drive (1) according to either of the preceding claims 2 or 4, **characterized in that** the spring housing (9) has an adjustable stop (16).

11. Worm drive (1) according to claim 10, **characterized in that** the adjustable stop (16) of the spring element (10) is a shim washer.

12. Worm drive (1) according to any of the preceding claims,
**characterized in that** the rotatably mounted worm shaft (4) is arranged in a bearing (18) consisting of a combination of a fixed bearing and a floating bearing.

13. Use of the worm drive (1) according to any of the preceding claims as a torque damper.

## Revendications

1. Entraînement à vis sans fin (1) comprenant :
• un arbre de vis sans fin (4) et une première unité de réception (2), dans lequel l'arbre de vis sans fin (4) est monté de manière mobile en rotation dans la première unité de réception (2) ;
• une roue tangente (5) et une seconde unité de réception (3), dans lequel la roue tangente (5) est montée de manière mobile en rotation dans la seconde unité de réception (3), et
• la première unité de réception (2) est disposée sur la seconde unité de réception (3) et l'arbre de vis sans fin (4) de la première unité de réception (2) monté de manière mobile en rotation est en contact avec la roue tangente (5) de la seconde unité de réception (3) pour la transmission d'un couple de rotation ;
• des chevilles de guidage (6) pour la liaison de manière amovible de la première unité de réception (2) à la seconde unité de réception (3), dans lequel la première unité de réception (2) reçoit au moins partiellement les chevilles de guidage (6) et la seconde unité de réception (3) est reliée à l'une des chevilles de guidage (6), à une première extrémité (7) ;
dans lequel un élément formant ressort (10) est disposé à une seconde extrémité des chevilles de guidage (8) entre la première unité de réception (2) et un moyen de fixation (12),
dans lequel les chevilles de guidage (6) fournissent une liaison mobile entre la première unité de réception (2) et la seconde unité de réception (3) et la première unité de réception (2) est mobile dans la direction d'extension des chevilles de guidage (6), et dans lequel le mouvement de la première unité de réception (2) comprend un mouvement axial de l'arbre de vis sans fin (4), monté radialement dans la première unité de réception (2), par rapport à la seconde unité de réception (3) comportant la roue tangente (5) le long de la direction d'extension des chevilles de guidage (6) et ledit mouvement axial est assuré par la liaison mobile,
et dans lequel l'entraînement à vis sans fin (1) présente un nombre pair de chevilles de guidage (6) pour la liaison de manière amovible de la première unité de réception (2) à la seconde unité de réception (3),
**caractérisé en ce que**
l'entraînement à vis sans fin (1) présente au moins quatre chevilles de guidage (6) pour la liaison de manière amovible de la première unité de réception (2) à la seconde unité de réception (3), et dans lequel
la moitié des chevilles de guidage (6) utilisées présentent une douille de glissement (13), et dans lequel au moins deux des chevilles de guidage (6) utilisées présentent une douille de glissement (13), et dans lequel
les chevilles de guidage (6) qui présentent la douille de glissement (13) sont disposées en diagonale les unes par rapport aux autres sur la première unité de réception (2) et sont fixées par le moyen de fixation (12).

2. Entraînement à vis sans fin (1) selon la revendication 1,
**caractérisé en ce que** l'élément formant ressort (10) est reçu dans un boîtier de ressort (9).

3. Entraînement à vis sans fin (1) selon l'une des revendications précédentes, **caractérisé en ce que** l'élément formant ressort (10) est choisi dans un groupe contenant ressorts à disques, ressorts hélicoïdaux, ressorts coniques, ressorts de compression, ressorts en caoutchouc et/ou en élastomères et/ou en polyuréthane, ressorts métalliques, ressorts en plastique renforcés de fibres, ressorts à gaz.

4. Entraînement à vis sans fin (1) selon la revendication 2,
**caractérisé en ce qu'**un espace (11) est formé entre la première unité de réception (2) et le boîtier de ressort (9).

5. Entraînement à vis sans fin (1) selon l'une des revendications précédentes, **caractérisé en ce que** le moyen de fixation (12) comprend un écrou de réglage et un dispositif de blocage de l'écrou de réglage choisi dans un groupe contenant écrou de réglage autobloquant, écrou de réglage goupillé, dispositif de blocage à adhésif de l'écrou de réglage, dispositif de blocage à fil de l'écrou de réglage, contre-écrou, bague de blocage en plastique, dispositif de blocage de type Locktix, paire de rondelles de blocage à coin, rondelle ou tôle de blocage, bague d'arrêt.

6. Entraînement à vis sans fin (1) selon l'une des revendications précédentes, **caractérisé en ce que** l'élément formant ressort (10) exerce, par l'intermédiaire de la force de ressort, une précontrainte (14) sur la première unité de réception (2) dans une plage allant de 10 N à 100 N, de préférence dans une plage allant de 30 N à 70 N, de manière particulièrement préférée de 50 N.

7. Entraînement à vis sans fin (1) selon l'une des revendications précédentes, **caractérisé en ce que** l'élément formant ressort (10) fournit une course de ressort dans une plage comprise entre 0,01 mm à 0,2 mm, en particulier dans une plage comprise entre 0,03 mm à 0,15 mm, de préférence dans une plage comprise entre 0,05 mm à 0,1 mm.

8. Entraînement à vis sans fin (1) selon l'une des revendications précédentes, **caractérisé en ce que** l'arbre de vis sans fin (4) et la roue tangente (5) présentent une denture (15) comportant des flancs de denture.

9. Entraînement à vis sans fin (1) selon la revendication 8,
**caractérisé en ce que** l'élément formant ressort (10) déplace la denture (15) de l'arbre de vis sans fin (4) en direction de la denture (15) de la roue tangente (5), dans lequel les flancs de denture de l'arbre de vis sans fin (4) viennent en prise dans les flancs de denture de la roue tangente (5), de sorte que l'espace entre les flancs de denture est minimisé.

10. Entraînement à vis sans fin (1) selon l'une des revendications précédentes 2 ou 4, **caractérisé en ce que** le boîtier de ressort (9) présente une butée (16) ajustable.

11. Entraînement à vis sans fin (1) selon la revendication 10,
**caractérisé en ce que** la butée (16) ajustable de l'élément formant ressort (10) est une rondelle d'ajustage.

12. Entraînement à vis sans fin (1) selon l'une des revendications précédentes, **caractérisé en ce que** l'arbre de vis sans fin (4) monté de manière mobile en rotation est disposé dans un palier (18) constitué d'une combinaison de palier fixe et de palier libre.

13. Utilisation de l'entraînement à vis sans fin (1) selon l'une des revendications précédentes comme amortisseur de couple de rotation.
